# EUROPÄISCHE PATENTSCHRIFT

(11) **EP 2 131 079 B1**
(45) Veröffentlichungstag und Bekanntmachung des Hinweises auf die Patenterteilung: **15.08.2012**
(21) Anmeldenummer: 09007250.5
(22) Anmeldetag: 29.05.2009
(51) Int. Cl.: F16J 15/32, F16J 15/16, F15B 15/12

(54) **Radialwellendichtungssystem**
Radial shaft sealing system
Système d'étanchéité d'arbres radiaux

(30) Priorität: 03.06.2008 DE 102008026599
(43) Veröffentlichungstag der Anmeldung: 09.12.2009
(73) Patentinhaber: Carl Freudenberg KG, 69469 Weinheim (DE)
(72) Erfinder: Schneider, Thomas, 35037 Marburg (DE); Freitag, Edgar, 34613 Schwalmstadt (DE); Wildner, Frank, 95100 Selb (DE); Lauterbach, Frank, 95186 Höchstädt (DE)

(56) Entgegenhaltungen:
- EP-A- 2 048 373
- DE-A-102005 061 203
- GB-A- 929 528
- GB-A- 2 050 512
- US-A- 3 426 654

## Beschreibung

Die vorliegende Erfindung betrifft ein Radialwellendichtungssystem, eine Dichtungsanordnung und einen Schwenkmotor mit einer solchen Dichtungsanordnung, sowie die Verwerdung des Schwenkmotors zum Antrieb eines Cabrioverdecks.

Radialwellendichtungen, wie Stangen oder Kolbendichtungem, kommen beispielsweise in hydraulischen Schwealanotoren zum Einsatz. Ein Schwenkmotor wandelt hydraulische Kraft in eine mechanische Drehbewegung um und weist hierzu eine Welle und eine Weilenaufnahme, wie ein Gehäuse auf. Wesentlicher Bestandteil eines hydraulischen Schwenkmotors ist ein von der Welle radial abstehender Flügel, der das Gehäuse in zwei hydraulische Druckräume teilt. Der Flügel liegt an der Wand des Gehäuses an und weist an seinem Rand eine umlaufende Dichtung auf. Durch wechselseitiges Beaufschlagen der beiden Druckräume mit einem hydraulischen Druck ist es möglich, ein Schwenken der Welle in die eine und die andere Richtung zu erzeugen. Radialwellendichtungen dichten das Gehäuse gegenüber der Welle ab, um den Austritt von Hydraulik-Öl aus dem Gehäuse zu verhindern. Die Dichtung liegt hierbei am Flügel an und verhindert dadurch gleichzeitig, dass das Hydraulik-Öl im Spalt zwischen dem Gehäuse und der Welle um den Flügel herum von einem Druckraum in den anderen fließen kann.

Üblicherweise erfolgt der Betrieb eines Schwenkmotors im Hochdruckbereich und stellt damit hohe Anforderungen an das Dichtungssystem. Neben der umlaufenden Flügeldichtung ist daher ein spezielles Radialwellendichtungssystem nötig, das den Spalt zwischen dem Gehäuse und der Welle, also dem Rotor und dem Stator, abdichtet. Hierbei kommen Dichtungsanordnungen mit Nutringen zum Einsatz, die mit einem Vorspanndruck beatdschlagt werden, um die Dichtlippen der Nutringe aufzuspreizen und an die Maschinenelemente anzupressen. Durch den Vorspanndruck werden die Nutringe gleichzeitig axial gegen z.B. den Flügel des Schwenkmotors gedrängt.

Die Dichtringe sind durch den hohen hydraulischen Druck und die Schwenkbewegung des Motors einer hohen mechanischen Belastung ausgesetzt. Zudem tritt ein als Spaltextrusion bezeichnetes Problem auf, d.h. der Dichtring dringt aufgrund des axialen Vorspanndrucks in den Spalt zwischen Rotor und Stator ein. Zur Vermeidung der Spaltextrusion der Dichtringe werden in der Dichtungsanordnung zusätzlich Antiextrusionsringe, so genannte Backringe, aus einem belastbareren Material angrenzend an den Spalt eingesetzt (siehe z.B. GB-A-929 528).

Aufgabe der vorliegenden Erfindung ist es, die Dichtungswirkung von Radialwellendichtungssystemen mit Backringen, insbesondere zur Verwendung in Schwenkmotoren für Cabrioverdeckantriebe, zu verbessern.

Die Aufgabe wird durch ein Radialwellendichtungssystem und eine Dichtungsanordnung gemäß den unabhängigen Ansprüchen gelöst. In davon abhängigen Ansprüchen sind vorteilhafte Weiterbildungen und Ausgestaltungen der Erfindung angegeben.

Ein erfindungsgemäßes Radialwellendichtungssystem umfasst zumindest einen Dichtring und einen Backring. Der Dichtring weist mindestens eine erste radial innen liegende Dichtfläche, mindestens eine zweite radial außen liegende Dichtfläche sowie eine die außen und innen liegenden Dichtflächen verbindende erste Seitenfläche zum Beaufschlagen des Dichtrings mit einem Vorspanndruck und eine der ersten Seitenfläche gegenüber liegende, die außen und innen liegenden Dichtflächen verbindende zweite Seitenfläche auf. Die erste Seitenfläche des Dichtrings wird im Betrieb mit einem Vorspanndruck beaufschlagt, der größer oder gleich dem Betriebsdruck in dem an die zweite Seitenfläche angrenzenden abzudichtenden Raum ist. Dadurch wird sichergestellt, dass der Arbeitsdruck in dem abzudichtenden Raum den Dichtring nicht axial verlagern kann.

Die zweite Seitenfläche des Dichtrings des erfindungsgemäßen Radialwellendichtungssystems weist einen Bereich auf, der - von der diesem Bereich am nächsten gelegenen Dichtfläche aus betrachtet - in einer von der ersten Seitenfläche des Dichtrings wegweisenden Richtung geneigt ist Dieser Bereich kann je nach Art der Dichtung radial innen oder radial außen liegen. An diesem Bereich kann nun im Betrieb eine erste Fläche des entsprechend dimensionierten Backrings flächig anliegen. Durch diese Abschrägung des Dichtrings wird der Backring durch den Vorspanndruck in eine radiale Richtung gedrängt, da dieser auf dem geneigten Bereich des Dichtrings gleiten kann. Der geneigte Bereich wird dementsprechend so gewählt, dass der Backring radial in Richtung eines bei der Abdichtung kritischen Bereichs gedrängt wird, beispielsweise in einen Spalt zwischen dem Flügel des Schwenkmotors einerseits und der Wellenaufnahme im Gehäuse des Schwenkmotors andererseits.

Bei dem erfindungsgemäßen Radialwellendichtungssystem weist der Backring des Weiteren eine zweite geneigte Backringfläche auf, die im Betrieb der ersten Seitenfläche des Dichtrings abgewandt ist und von der Backringmittelachse aus betrachtet in einer der ersten Backringfläche entgegengesetzten Richtung geneigt ist. Durch diese Neigung besitzt der Backring eine vorzugsweise spitzwinklige Kante, die eine Spaltlinie abdichten kann. Im Gegensatz dazu besitzen Backringe im Stand der Technik diese Neigung nicht und sind daher zum Abdichten von großflächigen Spalten bestimmt. Durch den Vorspanndruck wird nun einerseits durch den oben beschriebenen geneigten Bereich des Dichtrings der Backring radial in Richtung des Spalts gedrängt, und aufgrund der Neigung der zweiten Backringfläche dringt der Backring mit seiner vorzugsweise spitzwinkligen Kante in den Spalt ein und dichtet diesen ab. Anders als bei Dichtungssystemen, bei denen der Backring ohne Neigung an dem Maschinenelement flächig anliegt, ist durch die beschriebene Neigung eine bessere Abdichtung des Spalts möglich.

Bevorzugt ist die Neigung der zweiten Backringfläche derart gewählt, dass die zweite Backringfläche mit einer Ebene, welche zwischen der ersten und der zweiten Sackringfläche senkrecht zur Backringmittelachse verläuft, einen Winkel α im Bereich von 0° < α < 60° einschließt.

Weiter bevorzugt schließt der geneigte Bereich der zweiten Seitenfläche des Dichtrings mit einer Ebene, welche zwischen der ersten und der zweiten Seitenfläche des Dichtrings senkrecht zur Dichtringmittelachse verläuft, einen Winkel (90° - β) mit β im Bereich 15° < β < 60° ein.

Diese Wahl spezieller Neigungswinkel ist ideal für das Zusammenwirken des Dichtrings und des Backrings in Verbindung mit einem axialen Vorspanndruck, so dass eine optimale Abdichtung eines linienförmigen Spalts durch das Radialwellendichtungssystem möglich wird. Vorteilhaft ist dabei die Wahl eines dreieckigen oder zumindest im Wesentlichen dreieckigen Querschnitts des Backrings.

Eine bevorzugte Ausgestaltung eines Radialwellendichtungssystem sieht vor, dass zwei Dichtringe paarweise angeordnet sind, wobei die Seiten zum Beaufschlagen des Vorspanndrucks einander zugewandt sind. Der Vorspanndruck wird dabei zwischen den Dichtringen über eine Druckleitung aufgebracht und drängt diese axial auseinander gegen die abzudichtenden Spalte. Durch diese Anordnung ergibt sich einerseits die oben beschriebene Abdichtung der Spaltlinie zwischen dem Flügel und der Wellenaufnahme. Andererseits dient der zweite, axial vom Flügel weiter entfernte Dichtring zum Abdichten des Zwischenraumes zwischen den beiden Dichtringen, der mit dem Vorspanndruck beaufschlagt wird, wobei der Vorspanndruck dabei größer oder gleich dem Druck in den Druckräumen sein sollte. Aufgrund des hohen Vorsparmdrucks kann es weiter vorteilhaft sein, wenn auch an dem zweiten Dichtring ein Backring angeordnet ist, um auch eine Spaltextrusion an dem Spalt zwischen Welle und Gehäuse des zweiten Dichtrings zu vermeiden und gleichzeitig durch die erfindungsgemäße Neigung des Backrings den dortigen Spalt effektiv abzudichten.

Besonders vorteilhaft ist es, wenn der Dichtring ein Nutring ist Der Vorspanndruck wirkt dabei auf die Nut des Nutrings und spreizt die Dichtlippen des Nutrings auf, wodurch diese radial gegen die Maschinenelemente gepresst werden.

Um eine besonders effektive Abdichtung des Spalts zu ermöglichen, besteht der Backring bevorzugt aus einem Thermoplast. Dieser kann durch Druck und Temperatur verformt werden und fördert den erfindungsgemäßen Effekt des Radialwellendichtungssystems. Besonders bevorzugt wird als Material für den Backring Polytetrafluorethylen (PTFE) verwendet.

Eine erfindungsgemäße Dichtungsanordnung umfasst neben dem vorbeschriebenen Radialwellendichtungssystem ein erstes und ein zweites Maschinenelement, die durch einen Spalt getrennt sind. Dieser Spalt wird durch das Radialwellendichtungssystem abgedichtet.

Das Radialwellendichtungssystem kommt bevorzugt in einem erfindungsgemäßen Schwenkmotor zum Einsatz. Ein Schwenkmotor umfasst wie eingangs beschrieben z.B. ein hydraulisches Gehäuse, eine das Gehäuse durchdringende Welle und einen radial von der Welle abstehenden, an der Wand des Gehäuses dichtend anliegenden Flügel, der das Gehäuse in zwei Druckräume teilt. Die Welle wird dabei gegen das Gehäuse durch das erfindungsgemäße Radialwellendichtungssystem abgedichtet. Dabei liegt das Radialwellendichtungssystem an dem Flügel an und dichtet so gleichzeitig die beiden Druckräumen gegeneinander ab, indem der Backring in den Spalt zwischen dem Flügel und dem Gehäuse eindringt und diesen zwerlässig abdichtet.

Ein solcher Schwenkmotor wird vorteilhaft in einem Cabrioverdeckantrieb verwendet.

Nachfolgend wird die Erfindung anhand von Ausführungsbeispielen unter Bezugnahme auf die betgefügten Zeichnungen näher beschrieben. Es zeigen:
Figur 1 einen Schwenkmotor im Querschnitt,
Figur 2 einen Schwenkmotor im Längsschnitt,
Figur 3 eine Dichtungsanordnung mit zwei Dichtringen und zwei Backringen als Prinzipdarstellung im Schnitt, und
Figur 4 eine im Einsatz befindliche Dichtungsanordnung mit einem Dichtring und einem Backring im Schnitt.

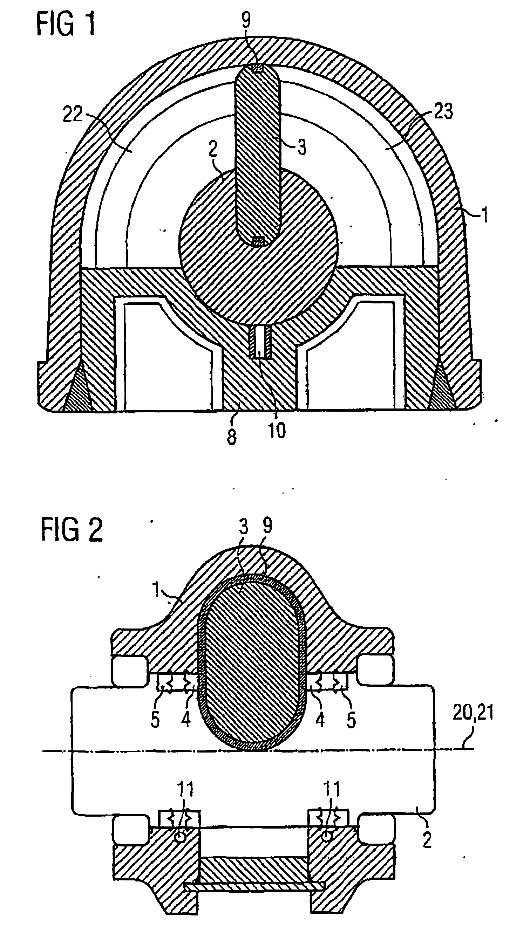

Figur 1 zeigt einen Querschnitt eines hydraulischen Schwenkmotors quer zur Welle 2. Das Gehäuse 1 wird von einem Deckel 8 verschlossen, der gleichzeitig als Anschlag für die Schwenkbewegung des Flügels 3 dient Der Flügel 3 steht radial von der Welle 2 ab und teilt das Gehäuse 1 in zwei hydraulische Druckräume 22, 23. Um eine Leckage zwischen den Druckräumen 22, 23 zu verhindern, weist der Flügel 3 eine umlaufende Dichtung 9 auf. Der Deckel 8 besitzt eine Dichtleiste 10, um ebenfalls die Druckräume 22, 23 gegeneinander abzudichten. Wird nun beispielsweise der rechte Druckraum 23 mit einem hydraulischen Druck beaufschlagt, dreht sich die Welle 2 nach links und umgekehrt.

In Figur 2 ist der Schwenkmotor im Längsschnitt entlang der Dichtringmittelachse 20 und der Backringmittelachse 21, die typischerweise zusammenfallen, dargestellt. Zu erkennen ist der von der Welle 2 radial apstehende Flügel 3 mit der umlaufenden Dichtung 9, die an der Innenwand des Gehäuses 1 anliegt. Um eine Leckage der Druckräume 22, 23 entlang der Welle 2 zu verhindern, ist eine Dichtungsanordnung mit Nutringen 4, 5 vorgesehen. Die Nutringe 4 liegen dabei am Flügel an und verhindern auf diese Weise eine Leckage zwischen den beiden Druckräumen 22, 23 um den Flügel 3 herum. Jeweils zwei Nutringe sind paarweise auf beiden Seiten des Flügels 3 so angeordnet, dass der Zwischenraum zwischen jeweils zwei Nutringen 4, 5 über Druckleitungen 11 mit einem Vorspanndruck beaufschlagt werden kann, um dadurch einerseits die Nutringe 4 gegen den Flügel 3 und andererseits die Dichtlippen der Nutringe 4, 5 gegen die Welle 2 und das Gehäuse 1 zu pressen. Die axial von dem Flügel 3 entfernten Nutringe 5 dichten dabei die Zwischenräume zwischen den paarweise angeordneten Nutringen 4, 5 gegenüber der Umgebung ab. Der Vorspanndruck ist stets größer oder gleich dem Druck in den beiden hydraulischen Druckräumen 22, 23 des Schwenkmotors, um eine schere Abdichtung der Druckräume 22, 23 um den Flügel 3 herum zu gewährleisten.

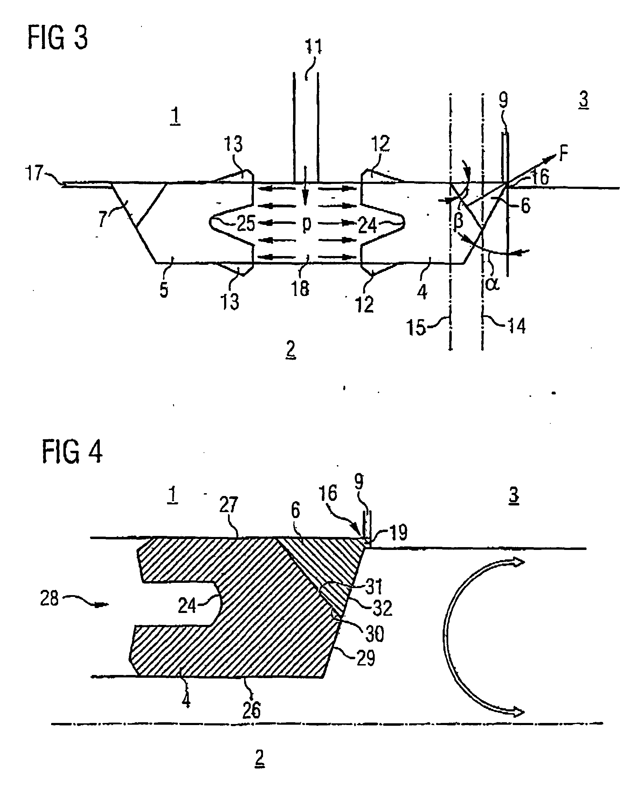

Figur 3 veranschaulicht die prinzipielle Wirkungsweise dieser Dichtungsanordnung in Kombination mit zwei Backringen 6, 7. Die Nuten 24, 25 der Nuiringe 4, 5 weisen zueinander und werden mit einem Vorspanndruck p beaufschlagt. Die Dichtlippen 12, 13 der Nutringe 4, 5 werden durch den hohen Vorspanndruck aufgespreizt und gegen die Innenwände der Nut zwischen Welle 2 und Gehäuse 1 gepresst, in der sich die Nutringe 4, 5 befinden. Gleichzeitig werden die beiden Nutringe 4, 5 durch den Vorspanndruck p in Richtung der abzudichtenden Spalte 16, 17 auseinander gepresst. Der Nutring 4 wird dabei gegen den Flügel 3 gepresst und dichtet den Spalt 16 zwischen Flügel 3, Welle 2 und Gehäuse 1 ab, wohingegen der Nutring 5 den Spalt 17 zwischen Welle 2 und Gehäuse 3 abdichtet.

Um eine Spaltextrusion der Nutringe 4, 5 zu verhindern, liegen an den beiden Nutringen 4, 5 die Backringe 6, 7 an. Dabei ist ein Bereich der Seitenfläche beispielsweise des Nutrings 4, an dem der Backring 6 anliegt, gegenüber der mit 15 bezeichnetet Ebene um einen Winkel 90°-β geneigt. Dies hat zur Folge, dass der Backring 6 durch den Vorspanndruck p mit einer radialen Kraftkomponente in Richtung des Spalts 16 gepresst wird. Dies ist durch den Kraftpfeil F angedeutet

Zudem weisen die Backringe 6, 7 einen dreieckigen Querschnitt auf. Dabei ist die Seite von beispielsweise dem Nutring 4, die von dem Zwischenraum 18 abgewandt ist, gegenüber der mit 14 bezeichneten Ebene um einen Winkel α geneigt. Dadurch wird eine Abdichtung der beiden Druckräume des Schwenkmotors gegeneinander im Übergangsbereich zwischen der Welle 2 und dem Flügel 3 optimiert. Der Winkel α ermöglicht, dass die Kante des Backrings 6, der aus einem Thermoplast wie Polytetrafluorethylen (PTFE) besteht, in den Spalt 16 eindringen und diesen abdichten kann. Der Backring 6 aus Polytetrafluorethylen wird benötigt, da in diesem abzudichtenden Spalt 16 durch die Relativbewegungen zwischen der Welle 2 und dem Gehäuse 1 während der Schwenkbewegungen hohe mechanische Betastungen auftreten. Auf der hier radial innen liegenden Seite des Nutrings 4 treffen nur die Welle 2 und der Flügel 3 aufeinander, die sich relativ zueinander nicht bewegen. Deshalb ist auf dieser Seite kein Backring notwendig. Analoges gilt für den Nutring 5 und den Backring 7 an dem abzudichtenden Spalt 17, an dem die Welle 2 und das Gehäuse 1 relativ zueinander beweglich aufeinander treffen.

In Figur 4 ist ein Teil der Dichtungsanordnung mit dem Dichtring 4 und dem Backring 6 vergrößert im Einsatz dargestellt. Der Pfeil deutet die Schwenkbewegung der Welle 2 und des Flügels 3 gegenüber dem Gehäuse 1 an. Durch den Vorspanndruck, der auf die Seitenfläche 28 und damit die Nut 24 des Nutrings 4 wirkt, werden die radial innen liegende Dichtfläche 26 gegen die Welle 2 und die radial außen liegende Dichtfläche 27 gegen das Gehäuse 1 gedrückt.

Die Seitenfläche 29 weist einen Bereich 30 auf, der in einer von der Seitenfläche 28 wegweisenden Richtung geneigt ist Daran liegt der Backring 6 mit der Backringfläche 31 flächig an. Eine zweite Backringfläche 32 ist entgegen der Neigung der Backringfläche 31 geneigt und liegt an einer schrägen Fläche der Welle 2 an. Durch die schrägen Flächen 31 und 32 wird der Backring 6 durch den Vorspanndruck radial nach außen gedrängt und die Kante 19 des Backrings 6 kann in den Spalt 16 eindringen und diesen so abdichten.

## Patentansprüche

1. Radialwellendichtungssystem, umfassend zumindest einen Dichtring (4, 5) mit mindestens einer ersten radial innen liegenden Dichtfläche (26), mindestens einer zweiten radial außen liegenden Dichtfläche (27), einer die außen und innen liegenden Dichtfläche (26, 27) verbindenden ersten Seitenfläche (28) zum Beaufschlagen, des Dichtrings (4, 5) mit einem Vorspanndruck und einer der ersten Seitenfläche (28) gegenüber liegenden, die außen und innen liegenden Dichtflächen (26, 27) verbindenden zweiten Seitenfläche (29), wobei die zweite Seitenfläche (29) einen Bereich (30) aufweist, der - von der diesem Bereich (30) am nächsten gelegenen Dichtfläche (27) aus betrachtet - in einer von der ersten Seitenfläche (28) des Dichtrings (4) wegweisenden Richtung geneigt ist und des Weiteren umfassend einen Backring (6, 7), der so dimensioniert ist, dass er im Betrieb mit einer ersten Backringfläche (31) flächig an dem geneigten Bereich (30) der zweiten Seitenfläche (29) anliegen kann, wobei der Backring (6, 7) eine zweite Backringfläche (32) aufweist, die im Betrieb der ersten Seitenfläche (28) des Dichtrings (4, 5) abgewandt und von der Backringmittelachse (21) aus betrachtet in einer von der ersten Backringfläche (31) entgegengesetzten Richtung geneigt ist,
**dadurch gekennzeichnet, dass** die zweite Seitenfläche des Dichtrings (4) gegenüber einer Ebene (14), welche senkrecht zur Backringmittelachse (21) verläuft, um einen Winkel geneigt ist.

2. Radialwellendichtungssystem nach Anspruch 1, **dadurch gekennzeichnet, dass** die zweite Backringfläche (32) mit der Ebene (14), welche zwischen der ersten (31) und der zweiten Backringfläche (32) senkrecht zur Backringmittelachse (21) verläuft, einen Winkel α im Bereich von 0°< α < 60° einschließt.

3. Radialwellendichtungssystem nach Anspruch 1 oder 2, **dadurch gekennzeichnet, dass** der geneigte Bereich (30) der zweiten Seitenfläche (29) des Dichtrings (4, 5) mit einer Ebene (15), weiche zwischen der ersten (28) und der zweiten Seitenfläche (29) des Dichtrings (4, 5) senkrecht zur Dichtringmittelachse (20) verläuft, einen Winkel (90° - β) mit β im Bereich 15° < β < 60° einschließt.

4. Radialwellendichtungssystem nach einem der Ansprüche 1 bis 3, **dadurch gekennzeichnet, dass** der Backring (6, 7) einen dreieckigen Querschnitt aufweist,

5. Radialwellendichtungssystem nach einem der Ansprüche 1 bis 4, **dadurch gekennzeichnet, dass** der Dichtring (4, 5) ein Nutring ist.

6. Radialwellendichtungssystem nach einem der Ansprüche 1 bis 5, **dadurch gekennzeichnet, dass** der Backring (6, 7) aus einem Thermoplast, bevorzugt aus Polytetrafluorethylen, besteht.

7. Dichtungsanordnung, umfassend ein erstes und ein zweites Maschinenelement, sowie ein einen Spalt (16,17) zwischen den beiden Maschinenelementen abdichtendes Dichtungssystem, **dadurch gekennzeichnet, dass** das Dichtungssystem ein Radialwellendichtungssystem nach einem der Ansprüche 1 bis 6 ist.

8. Schwenkmotor, umfassend ein hydraulische Gehäuse (1), eine das Gehäuse (1) durchdringende Welle (2) und einen radial von der Welle (2) abstehenden, an der Wand des Gehäuses (1) dichtend aufliegenden Flügel (3), der das Gehäuse (1) in zwei Druckräume (22, 23) teilt, sowie ein Dichtungssystem, das angrenzend an den Flügel (3) einen Spalt (16) zwischen der Welle (2) und dem Gehäuse (1) abdichtet, **dadurch gekennzeichnet, dass** das Dichtungssystem ein Radialwellendichtungssystem nach einem der Ansprüche 1 bis 6 ist, wobei der Backring (6) des Radialwellendichtungssystems an den Spalt (16) zwischen dem Flügel (3) und dem Gehäuse (1) angrenzt.

9. Schwenkmotor nach Anspruch 8, **dadurch gekennzeichnet, dass** zusätzlich zu dem Dichtring (4) des Radiaiwellendichtungssystems ein weiterer Dichtring (5) vorhanden ist wobei die Seiten (28) der beiden Dichtringe (4, 5) zum Beaufschlagen mit dem Vorspanndruck einander zugewandt sind und eine Druckteitung (11) für den Vorspanndruck in einen Zwischenraum (18) zwischen die Dichtringe (4, 5) führt.

10. Schwenkmotor nach Anspruch 9, **dadurch gekennzeichnet, dass** auch an dem zweiten Dichtring (5) ein Backring (7) angeordnet ist.

11. Verwendung eines Schwenkmotors nach einem der Ansprüche 8 bis 10 in einem Cabrioverdeckantrieb.

## Claims

1. Radial shaft sealing system, comprising at least one sealing ring (4, 5) with at least one first radially inner sealing surface (26), at least one second radially outer sealing surface (27), a first side surface (28), connecting the outer and inner sealing surfaces (26, 27) and intended for subjecting the sealing ring (4, 5) to a prestressing pressure, and a second side surface (29), lying opposite the first side surface (28) and connecting the outer and inner sealing surfaces (26, 27), the second side surface (29) having a region (30) which - when viewed from the sealing surface (27) lying closest to this region (30) - is inclined in a direction heading away from the first side surface (28) of the sealing ring (4), and further comprising a backing ring (6, 7), which is dimensioned such that during operation it can lie with a first backing ring surface (31) flat against the inclined region (30) of the second side surface (29), the backing ring (6, 7) having a second backing ring surface (32), which during operation is facing away from the first side surface (28) of the sealing ring (4, 5) and, when viewed from the backing ring central axis (21), is inclined in a direction opposite that of the first backing ring surface (31), **characterized in that** the second side surface of the sealing ring (4) is inclined by an angle with respect to a plane (14), which extends perpendicularly in relation to the backing ring central axis (21).

2. Radial shaft sealing system according to Claim 1, **characterized in that** the second backing ring surface (32) forms an angle α in the range from 0° < α < 60° with the plane (14), which extends between the first backing ring surface (31) and the second backing ring surface (32) perpendicularly in relation to the backing ring central axis (21).

3. Radial shaft sealing system according to Claim 1 or 2, **characterized in that** the inclined region (30) of the second side surface (29) of the sealing ring (4, 5) forms an angle (90° - β), where β is in the range of 15° < β < 60°, with a plane (15), which extends between the first side surface (28) and the second side surface (29) of the sealing ring (4, 5) perpendicularly in relation to the sealing ring central axis (20).

4. Radial shaft sealing system according to one of Claims 1 to 3, **characterized in that** the backing ring (6, 7) has a triangular cross section.

5. Radial shaft sealing system according to one of Claims 1 to 4, **characterized in that** the sealing ring (4, 5) is a groove ring.

6. Radial shaft sealing system according to one of Claims 1 to 5, **characterized in that** the backing ring (6, 7) consists of a thermoplastic, preferably of polytetrafluoroethylene.

7. Sealing arrangement, comprising a first and a second machine element, and also a sealing system sealing a gap (16, 17) between the two machine elements, **characterized in that** the sealing system is a radial shaft sealing system according to one of Claims 1 to 6.

8. Swivel motor, comprising a hydraulic housing (1), a shaft (2) passing through the housing (1) and a vane (3) protruding radially away from the shaft (2) and lying against the wall of the housing (1) in a sealing manner, which vane divides the housing (1) into two pressure chambers (22, 23), and comprising a sealing system, which seals a gap (16) between the shaft (2) and the housing (1) adjacent to the vane (3), **characterized in that** the sealing system is a radial shaft sealing system according to one of Claims 1 to 6, the backing ring (6) of the radial shaft sealing system being adjacent to the gap (16) between the vane (3) and the housing (1).

9. Swivel motor according to Claim 8, **characterized in that**, in addition to the sealing ring (4) of the radial shaft sealing system, there is a further sealing ring (5), the sides (28) of the two sealing rings (4, 5) facing each other to allow them to be subjected to the prestressing pressure and a pressure line (11) for the prestressing pressure leading into an intermediate space (18) between the sealing rings (4, 5).

10. Swivel motor according to Claim 9, **characterized in that** a backing ring (7) is also arranged on the second sealing ring (5).

11. Use of a swivel motor according to one of Claims 8 to 10 in a drive mechanism for the soft top of a convertible.

## Revendications

1. Système d'étanchéité à ondulations radiales, comprenant :
au moins une bague d'étanchéité (4, 5) dotée d'au moins une première surface d'étanchéité (26) située radialement à l'intérieur,
au moins une deuxième surface d'étanchéité (27) située radialement à l'extérieur,
une première surface latérale (28) qui relie les surfaces d'étanchéité (26, 27) situées respectivement à l'extérieur et à l'intérieur et destinée à appliquer sur la bague d'étanchéité (4, 5) une pression de précontrainte, et
une deuxième surface latérale (29) située face à la première surface latérale (28) et reliant les surfaces d'étanchéité (26, 27) situées respectivement à l'extérieur et à l'intérieur,
la deuxième surface latérale (29) présentant une partie (30) inclinée dans une direction qui s'éloigne de la première surface latérale (28) de la bague d'étanchéité (4) depuis la surface d'étanchéité (27) située le plus près de cette partie (30),
le système comprenant en outre :
une bague de dos (6, 7) dimensionnée de telle sorte qu'en fonctionnement, elle puisse reposer à plat par une première surface (31) de bague de dos sur la partie inclinée (30) de la deuxième surface latérale (29),
la bague de dos (6, 7) présentant une deuxième surface (32) de bague de dos qui, en fonctionnement, n'est pas tournée vers la première surface latérale (28) de la bague d'étanchéité (4, 5) et qui est inclinée dans une direction opposée à celle de la première surface (31) de bague de dos depuis l'axe central (21) de la bague de dos,
**caractérisé en ce que**
la deuxième surface latérale de la bague d'étanchéité (4) est inclinée d'un angle par rapport à un plan (14) qui s'étend perpendiculairement à l'axe central (21) de la bague de dos.

2. Système d'étanchéité à ondulations radiales selon la revendication 1, **caractérisé en ce que** la deuxième surface (32) de la bague de dos forme avec le plan (14) qui s'étend perpendiculairement à l'axe central (21) de la bague de dos entre la première surface (31) de bague de dos et la deuxième surface (32) de bague de dos un angle α compris dans la plage de 0° < α < 60°.

3. Système d'étanchéité à ondulations radiales selon les revendications 1 ou 2, **caractérisé en ce que** la partie inclinée (30) de la deuxième surface latérale (29) de la bague d'étanchéité (4, 5) forme avec un plan (15) qui s'étend perpendiculairement à l'axe central (20) de la bague d'étanchéité entre la première surface latérale (28) et la deuxième surface latérale (29) de la bague d'étanchéité (4, 5) un angle (90°-β), β étant compris dans la plage de 15° < β < 60°.

4. Système d'étanchéité à ondulations radiales selon l'une des revendications 1 à 3, **caractérisé en ce que** la bague de dos (6, 7) présente une section transversale triangulaire.

5. Système d'étanchéité à ondulations radiales selon l'une des revendications 1 à 4, **caractérisé en ce que** la bague d'étanchéité (4, 5) est une bague rainurée.

6. Système d'étanchéité à ondulations radiales selon l'une des revendications 1 à 5, **caractérisé en ce que** la bague de dos (6, 7) est constituée d'un thermoplastique et de préférence de polytétrafluoroéthylène.

7. Ensemble d'étanchéité comprenant un premier et un deuxième élément de machine ainsi qu'un système d'étanchéité qui ferme de manière hermétique un interstice (16, 17) situé entre les deux éléments de machine,
**caractérisé en ce que**
le système d'étanchéité est un système d'étanchéité à ondulations radiales selon l'une des revendications 1 à 6.

8. Moteur de pivotement, comprenant un carter hydraulique (1), un arbre (2) qui traverse le carter (1) et une aile (3) qui déborde radialement de l'arbre (2), qui repose de manière étanche sur la paroi du carter (1) et qui divise le carter (1) en deux espaces (22, 23) sous pression, ainsi qu'un système d'étanchéité qui assure l'étanchéité d'un interstice (16) situé entre l'arbre (2) et le carter (1) en position adjacente à l'aile (3),
**caractérisé en ce que**
le système d'étanchéité est un système d'étanchéité à ondulations radiales selon l'une des revendications 1 à 6, la bague de dos (6) du système d'étanchéité à ondulations radiales étant adjacente à l'interstice (16) entre l'aile (3) et le carter (1).

9. Moteur de pivotement selon la revendication 8, **caractérisé en ce qu'**en plus de la bague d'étanchéité (4) du système d'étanchéité à ondulations radiales, il présente une autre bague d'étanchéité (5), les côtés (28) des deux bagues d'étanchéité (4, 5) étant tournés l'un vers l'autre en vue d'appliquer une pression de précontrainte et un conduit sous pression (11) prévu pour la pression de précontrainte conduisant dans un espace intermédiaire (18) situé entre les bagues d'étanchéité (4, 5).

10. Moteur de pivotement selon la revendication 9, **caractérisé en ce qu'**une bague de dos (7) est également disposée sur la deuxième bague d'étanchéité (5).

11. Utilisation d'un moteur de pivotement selon l'une des revendications 8 à 10 dans l'entraînement de la capote d'un cabriolet.
